Europäisches Patentamt

European Patent Office

Office européen des brevets

(19)

(11) Veröffentlichungsnummer: **0 226 787**
**A2**

(12) # EUROPÄISCHE PATENTANMELDUNG

(21) Anmeldenummer: 86115515.8

(22) Anmeldetag: 08.11.86

(51) Int. Cl.⁴: **C 02 F 11/00**
**C 02 F 1/62**

(30) Priorität: 20.12.85 DE 3545321

(43) Veröffentlichungstag der Anmeldung:
01.07.87 Patentblatt 87/27

(84) Benannte Vertragsstaaten:
AT BE CH DE ES FR GB IT LI LU NL SE

(71) Anmelder: Ladendorf, Wolfdieter F.
Stenzelring 15
D-2102 Hamburg 93(DE)

(72) Erfinder: Ladendorf, Wolfdieter F.
Stenzelring 15
D-2102 Hamburg 93(DE)

(74) Vertreter: Siewers, Gescha, Dr. et al,
Rechtsanwälte Dr.Harmsen, Dr.Utescher
Dipl.-Chem.Harmsen,Bartholatus Dr.Schaeffer,Dr.Fricke
Patentanwälte Dr.Siewers,Dipl.Ing.Schöning
Adenauerallee 28
D-2000 Hamburg 1(DE)

(54) Verfahren zur Behandlung von schwermetallhaltigen Schlämmen.

(57) Die Erfindung betrifft ein Verfahren zur Behandlung von schwermetallhaltigen Schlämmen, wobei der Schlamm, gegebenenfalls nach biologischer Vorbehandlung, mit Komplexierungsmitteln und Enzymen versetzt, entwässert und mit Verfestigungshilfsmitteln versetzt wird und ist dadurch gekennzeichnet, daß die Zugabe des Komplexierungsmittels im Überschuß über die im Rohschlamm enthaltene Schwermetallmenge erfolgt, daß dem Schlamm vor der Entwässerung ein langsam wirkendes hydraulisches Bindemittel zugesetzt und daß us dem bei der Entwässerung anfallenden Trübwassers die Schwermetalle entfernt werden.

Verfahren zur Behandlung von schwermetallhaltigen Schlämmen

---

Die Erfindung betrifft ein Verfahren zur Behandlung
von schwermetallhaltigen Schlämmen wie sie vor allem
in Form von kommunalen Abwässern, landwirtschlaftlichen
Abwässern oder auch als Industrieschlämme und insbesondere als Gewässersedimente anfallen.

Die Beseitigung bzw. Verwertung von bei der Abwasserbehandlung oder bei Hafenbaggerarbeiten anfallenden
Schlämmen hat sich in den letzten Jahren als zunehmend
problematisch erwiesen, da einerseits die konventionellen
Behandlungsverfahren in der Regel zeit- und raumaufwendig
sind und da sich andererseits herausgestellt hat, daß
die als Rückstand verbleibenden Schlämme aufgrund ihrer
Schwermetallfracht eine Umweltbelastung darstellen. Bei
den bisher üblichen Behandlungsverfahren werden beim
anaeroben Verfahren mit Faulgasgewinnung Reaktionszeiten
von 15 bis 30 Tagen und in offenen Faulräumen bis zu
90 Tagen für erforderlich gehalten. Bei aerober Behandlung
beträgt die Reaktionszeit in Abhängigkeit von der Temperatur etwa 5 bis 28 Tage. Zur Verkürzung der Behandlungszeit ist bereits vorgeschlagen worden, derartige Schlämme
mit Enzympräparaten aus Bacillus subtilis zusammen mit einem
Komplexierungsmittel zu behandeln; ein derartiges Verfahren wird beispielsweise in der DE-OS 30 45 712 beschrieben. Sobwohl bei aerober als auch bei anaerober
Verfahrensführung läßt sich die Stabilisierungsdauer
für Schlämme auf diese Weise auf etwa 4 bis 10 Stunden
verkürzen. Die Komplexierungsmittel werden in diesem Zusammenhang aufgrund ihrer bekannten bakteriostatischen
bzw. bakteriziden Wirkung eingesetzt, da sie in Zusammenwirken mit dem Enzympräparat zu einer Schädigung der Zellenmembranen bei unerwünschten Mikroorganismen führen. Darüber hinaus soll das in der DE-OS 30 45 712 beschriebene Verfahren auch zu einer besseren Entwässerung der Schlämme führen, denn gerade die Entwässerung der Schlämme hat sich als schwieriges technologisches Problem erwiesen. Die stark wasserhaltigen Schlämme mit einem Feststoffanteil von etwa 4% werden bei allen bekannten Verfahren einer Entwässerung in sogenannten Eindickern, Zentrifugen oder Filterpressen unterzogen, wobei allerdings Produkte entstehen, die noch relativ viel Wasser enthalten und daher auch nach längerer Lagerzeit nicht stichfest sind, sondern einen gallertig-schmierigen Zustand aufweisen. Um die Verfestigung zu verbessern, sind schon zahlreiche Zusatzstoffe vorgeschlagen und zum Teil auch in der Praxis eingesetzt worden, wie beispielsweise gebrannter Kalk, hydraulische Bindemittel wie Hochofensände und -aschen, Polyelektrolyte und ähnliches. Bis auf relativ kleine Mengen von Flockungshilfmitteln, die vor dem Entwässern zugesetzt werden, erfolgt die Zuführung der Hauptmenge dieser Zusatzstoffe erst nach dem Entwässern und erfordert daher ein erneutes gründliches Vermischen und somit einen ziemlich umfangreichen maschinellen Aufwand. Bei allen bisher üblichen Verfahren ist es aber noch nicht möglich gewesen, im Abwasser bzw. in den Schlämmen vorliegende Schwermetalle vollständig zu entfernen; bei aerob arbeitenden Klärwerken liegen die Schwermetalle in der Regel als Sulfate vor und bleiben teilweise im Klärschlamm und teilweise nach der Entwässerung im Trübwasser, während bei anaerob arbeitenden Klärwerken die Schwermetalle in den Faultürmen in Sulfide übergehen und dann in der Regel zum größten Teil im Klärschlamm verbleiben. Auf jeden Fall verhindert die Belastung der Schlämme mit Schwermetallen deren weitere Verwendung, da sie beispielsweise

- 3 -

beim Einsatz in der landwirtschaftlichen Produktion
von Pflanzen und dementsprechend teilweise auch von
Tieren und somit schließlich vom Menschen aufgenommen
werden. Die selben Nachteile ergeben sich auch bei
der Behandlung von Hafen- oder anderen Gewässerschlicken,
da diese häufig auch eine ziemlich beträchtliche
Schwermetallast aufweisen.

Es besteht daher immer/hoch ein dringenden Bedürfnis
nach Verfahren zur Behandlung von Klärschlämmen oder
Hafenaushub, die einerseits relativ schnell und kostengünstig durchzuführen sind, nur geringen maschinellen
Aufwand erfordern, eine Entfernung von Schwermetallen
ermöglichen und zu einem bearbeitbaren und schnelltrocknenden Endprodukt führen, das ohne Umweltbelastung
weiterverwendet werden kann.

Erfindungsgemäß wird nunmehr ein Verfahren zur Behandlung von schwermetallhaltigen Schlämmen vorgeschlagen,bei dem der Schlamm, gegebenenfalls nach
biologischer Vorbehandlung mit Komplexierungsmitteln
und Enzymen versetzt, entwässert und mit Verfestigungshilfsmitteln versetzt wird, das dadurch gekennzeichnet
ist, daß der Rohschlamm vor der Entwässerung mit, bezogen
auf seinen Schwermetallgehalt, Komplexierungsmitteln
im Überschluß versetzt, vor der Entwässerung ebenfalls
mit einem langsam wirkenden  hydraulischen Bindemittel
versetzt und daß das bei der Entwässerung anfallende
Trübwasser nach der Entfernung der Schwermetallfracht
rezyklisiert wird.

- 4 -

Das erfindungsgemäße Verfahren geht wie bei den bekannten Verfahren davon aus, daß der stark wasserhaltige Rohschlamm gegebenenfalls einer biologischen Reinigungsstufe unterzogen wird. Im Anschluß wird der Schlamm nach Analyse der enthaltenen Schwermetalle mit Komplexierungsmitteln im Überschluß versetzt, woran sich die Zugabe von Enzympräparaten anschließt. Überraschenderweise wurde festgestellt, daß im Gegensatz zur DE-OS 30 45 712 bei diese Verfahrensführung die Menge der benötigten Enzyme stark reduzieren läßt, was sich wahrscheinlich dadurch erklärt, daß die Enzympräparate selbst eine gewisse komplexierende Wirkung aufweisen und daher ein Teil der Präparate nicht zur Hygienisierung des Rohschlammes, sondern zur Komplexbildung verbraucht wird. Da die Komplexbildungsfähigkeit dieser Produkte aber relativ schwach ausgeprägt ist, zersetzen sich die Komplexe im Laufe der weiteren Bearbeitung wieder, so daß keine Entfernung der Schwermetalle erfolgt.

Als Komplexierungsmittel können die für diesen Zweck bekannten Substanzen Verwendung finden wie beispielsweise Nitrilotriessigsäure, 1,2-Diamino-cyclohexan-N,N,N',N'-tetraessigsäure und insbesondere Ethylendiamin-tetraessigsäure, kurz EDTA genannt. Diese Komplexierungsmittel bilden mit Schwermetallen wie Kadmium, Chrom, Zink, Arsen, Blei usw. leicht wasserlöslichliche Komplexe im sauren bzw. schwachbasischem Milieu .. Die Komplexbildungskonstante ist so groß, daß auf diese Weise selbst -von ganz wenigen Ausnahmen abgesehen- schwerlösliche Salze der Schwermetalle in Lösung gebracht werden,

- 5 -

obgleich der größte Anteil der Schwermetallfracht
aufgrund des bis zu diesem Zeitpunkt aerobgeführten
Verfahrens in der Regel in Form mehr oder weniger
gutwasserlöslicher Sulfate vorliegt.

An die Behandlung von Komplexierungsmitteln schließt
die Enzymbehandlung an, bei der Präparate aus
Bacillus subilis eingesetzt werde, die in der Technik
bisher als sogeannntes "Brauereienzym" benutzt wurden.
Diese Enzympräparate enthalten ein Gemisch aus Proteasen,
Amylasen, Glucanasen und noch weiteren Enzymen, die
eine Stabilisierung des Rohschlammes durch Abbau eines
großen Teils der organischen Inhaltsstoffe bewirkten.
Der Rohschlamm wird der Einwirkung der Enzympräparate
etwa 1/2 bis 20 Stunden überlassen und anschließend
erfidungsgemäß mit einem langsam wirkenden hydraulischen
Bindemittel noch vor der  Entwässerung versetzt. Der
Zusatz hydraulischer Bindemittel war zwar bisher bekannt.
Diese wurden aber erst nach der Entwässerung des Rohschlammes
zugegeben, da die im Rohschlamm enthaltenen Tonpartikel
über eine sehr starke Hydratisierung- und wasserbindungsfähigkeit verfügen, so daß selbst der mit Verfestigungsmittel behandelte Schlamm noch monate- zum Teil sogar
jahrelang nicht richtig austrocknet und fest wird. Statt
der bekannten hydraulischen  Bindemittel werden erfindungsgemäß Kraftwerksflugaschen eingesetzt, die bisher als
Zusatz zu Beton oder als Streckmittel für Straßenbauprodukte
verwendet wurden. Diese Filteraschen müssen eine spezifische
Oberfläche von über 5000 cm³/g bei einem überwiegenden
Anteil der Korngrößen unter 0,05 mm aufweisen und zeigen
bei der HCl-Analyse einen Gehalt von etwa 67 bis 70% in

- 6 -

Inertmaterial, während die "aktiven" Oxyde wie Siliziumdioxid, Aluminiumoxid, Kalziumoxid oder Magnesiumoxid
dementsprechend nur ein Anteil von 33 bis 30 %
ausmachen. Die hydraulischen Bindeeigenschaften
dieses Materials setzen erst nach relativ langer
Zeit ein, so daß es möglich ist, das Bindemittel
vor der Entwässerung dem Rohschlamm zuzusetzen,
womit auf die nachträgliche Zugabe eines Verfestigungsmittels und den dafür benötigten Maschinenpark verzichtet werden kann.

Nach der Entwässerung wird der kompaktierte Schlamm
zum Verfestigen und Trocknen gelagert. Völlig überraschend
und im Gegensatz zu den Erfahrungen mit den bisher verwendeten hydraulischen Bindemitteln tritt Stichfestigkeit
bereits nach wenigen Tagen ein. Es wird angenommen, daß
die hydraulischen Eigenschaften der erfindungsgemäß eingesetzten Kraftwerksflugasche dazu führen, daß die wasserhaltige Fähigkeit der Schlämme sehr stark verringert wird,
so daß die Schlämme nach der Behandlung innerhalb kurzer
Zeit in einen festen und entwässerten Zustand übergehen,
während bei Zusatz der bisher üblichen Verfestigungsmitteln
in der Regel nur eine mehr oder weniger gallertige Masse
entsteht, die das Wasser während überraschend langer Zeiträume noch festhält. Da das erfindungsgemäß hergestellte
Produkt weitgehend schwermetallfrei ist, kann es ohne
Umweltbelastung weiterverwendet werden, beispielsweise für
landwirtschaftliche oder gartenbauliche Zwecke.

Das bei der Eindickung des Rohschlammes abgeführte
Trübwasser enthält im wesentlichen die gesamte Schwermetallfracht und muß daher vor Rückleitung in Gewässer
oder anderweitiger Verwendung von den Schwermetallen
befreit werden. Es gibt zwar theoretisch eine ganze
Reihe von Möglichkeiten, die als Komplexe gelösten
Schwermetalle aus diesen wieder freizusetzen, in
technischem Maßstabe eignen sich aber vorzugsweise die Fällung mit Ammonsulfid oder die Behandlung mit
Kationenaustauschen mit freien Merkapto-Gruppen. Die
nach der Fällung als Sulfide vorliegenden Schwermetalle
oder die beladenen Ionenaustauscher können zur Wiedergewinnung der Reinmetalle verarbeitet werden.

Bei der Behandlung von Baggergut wie Gewässersedimenten
und Hafenschlicks ist es üblich, daß das Material
vorher klassiert wird, wobei die gröberen Kiese ohne
weiteres gelagert werden können, da sich erfahrungsgemäß die Schwermetalle in der Feinfraktion ansammeln.
Für die Klassierung wird Wasser benötigt, das in
der Regel im Kreislauf geführt wird. Um die bei der
Klassierung bereits anfallenden Schwermetalle in
Lösung zu halten, wird daher vorzugsweise auch das
Treibwasser mit Komplexierungsmitteln versetzt und
später ebenso wie das bei der Entwässerung der Feinfraktion anfallende Wasser aufgearbeitet.

Im folgenden wird die Erfindung anhand eines Beispiels
näher erläutert:

Beispiel

Zur Verarbeitung können Klärschlamm aus der biologischen
Abbaustufe, Vorbeckenschlämme oder sogenannte Misch-
Schlämme kommen. Der Schlamm wird auf den Gehalt an
Gesamtschwermetallen analysiert und je nach Schwermetallbelastung mit einem Überschluß vorgelöster EDTA versetzt, vorbei im allgemeinen pro m³ etwa 5 - 15 g EDTA
notwendig sind. Anschließend werden pro m³ 1 - 3g eines
Enzympräparates aus Bacillus subtilis zugeben und der
Schlamm wird dann fünf Stunden etwa bei 25 - etwa 50°C

- 8 -

gerührt und schwach belüftet. Nach der Inkubation
wird die erfindungsgemäß eingesetzte Kraftwerkfilterasche zugegeben, und zwar in Mengen von 1/3 bis 2/3
des berechneten Verststoffanteiles pro m³. Der Rohschlamm wird dann zur Entwässerung zentrifugiert und
kann nach Beendigung des Eindickens auf Schlammtrockenplätze gebracht werden. Das abgezogene Trübwasser kann entweder mit Ammonsulfid im Überschuß,
bezogen auf die zugesetzte Komplexierungsmittelmenge
behandelt und die sich bildendenden Schwermetallsulfide
abfiltriert werden oder das Trübwasser wird kontinuierlich
über SH-gruppenhaltige Kationenaustauscher geschickt,
wobei im Eluat die Metallfreiheit analysiert wird. Nach
der Entfernung der Schwermetalle kann das Wasser in die
Vorbecken zurückgeleitet oder für andere Zwecke eingesetzt oder gegebenenfalls in Gewässer zurück geleitet
werden.

Bei Durchführung des erfindungsgemäßen Verfahrens kann
auf die sonst in vielen Fällen übliche Schlammfaulung
verzichtet werden, da der kompaktierte Schlamm nicht nur
schwermetallfrei, sondern auch hygienisch unbedenklich
ist.

Patentansprüche

1.) Verfahren zur Behandlung von schwermetallhaltigen
Schlämmen, wobei der Schlamm, gegebenenfalls nach
biologischer Vorbehandlung, mit Komplexierungsmitteln und Enzymen versetzt, entwässert und mit
Verfestigungshilfmitteln versetzt wird, dadurch
gekennzeichnet, daß die Zugabe des Komplexierungsmittels im Überschuß über die im Rohschlamm
enthaltene Schwermetallmenge erfolgt, daß dem
Schlamm vor der Entwässerung ein langsam wirkendes
hydraulisches Bindemittel zugesetzt und daß aus
dem bei der Entwässerung anfallende Trübwasser
die Schwermetalle entfernt werden.

2.) Verfahren nach Anspruch 1.), dadurch gekennzeichnet
daß als Komplexierungsmittel EDTA eingesetzt wird.

3.) Verfahren nach Anspruch 1.) oder 2.), dadurch
gekennzeichnet , daß als Enzyme solche aus
Bacillus subtilis mit einem hohen Gehalt an Proteasen,
Amylasen und Glucanasen eingesetzt werden.

4.) Verfahren nach Anspruch 1.) bis 3.), dadurch
gekennzeichnet , daß als hydraulisches Bindemittel
Kraftwerkfilterasche mit einer spezifischen Oberfläche von mindestens 5000cm$^3$/g und bei der
HCl-Analyse einem Gehalt von etwa 67-70% in Inertverbindungen und etwa 33-30% aktiven Oxiden verwendet wird.

5.) Verfahren nach Anspruch 1.) bis 4.), dadurch gekennzeichnet , daß das bei der Entwässerung anfallende Trübwasser zur Entfernung der Schwermetalle einer Fällung mit Ammonsulfid oder einem Ionenaustausch unterzogen wird.